# EUROPÄISCHE PATENTSCHRIFT

(11) **EP 2 266 382 B1**
(45) Veröffentlichungstag und Bekanntmachung des Hinweises auf die Patenterteilung: **09.05.2012**
(21) Anmeldenummer: 10006248.8
(22) Anmeldetag: 16.06.2010
(51) Int. Cl.: A01D 41/14

(54) **Erntevorsatz für eine Erntemaschine**
Harvesting attachment for an agricultural harvester
Accessoire de récolte pour une moissonneuse

(30) Priorität: 25.06.2009 DE 102009030548
(43) Veröffentlichungstag der Anmeldung: 29.12.2010
(73) Patentinhaber: BISO Schrattenecker GmbH, 4974 Ort Im Innkreis (AT); CNH Belgium N.V., 8210 Zedelgem (BE)
(72) Erfinder: Schrattenecker, Franz, 4773 Eggerding (AT)
(74) Vertreter: Zinnecker, Armin

(56) Entgegenhaltungen:
- DE-A1- 3 245 372
- FR-A- 1 471 041
- US-A- 5 671 595
- US-A1- 2008 271 426

## Beschreibung

Die vorliegende Erfindung betrifft einen Erntevorsatz für eine Erntemaschine, wobei der Erntevorsatz einen Rahmen umfaßt, der sich zur Aufnahme verschiedener Erntewerkzeuge, insbesondere Schneidewerke, eignet. Der Erntevorsatz wird während des Erntebetriebs in einer Vorwärtsrichtung mittels einer landwirtschaftlichen Erntemaschine über ein Feld bewegt und dient zur Aufnahme bestimmter Erntefrüchte. Beispielsweise umfaßt der Erntevorsatz ein Schneidewerk, eine Haspel und weitere benötigte Komponenten und ist an der Frontseite eines Mähdreschers montierbar. Ebenso kann der Erntevorsatz einen Maisadapter umfassen wie er bei einem bekannten Maishäcksler verwendet wird.

Grundsätzlich ist es in der Landmaschinenindustrie derzeit weitestgehend erwünscht immer breitere Erntevorsätze für selbstfahrende Erntemaschinen anzubieten, die es dem Landwirt ermöglichen, ein Feld in kürzerer Zeit und mit weniger Überfahrungen abzuernten. Die maximale Breite eines Erntevorsatzes ist jedoch aufgrund zunehmender Materialbelastung in Abhängigkeit der verwendeten Materialmenge hinsichtlich der Stabilität der Konstruktion beschränkt. Dabei spielen beispielsweise axiale Flächenträgheitsmomente eine wichtige Rolle, die ein Maß für den Widerstand des Querschnitts des Erntevorsatzes gegen Biegung darstellen. Weiterhin müssen auch angreifende Torsionskräfte bei der Dimensionierung des Erntevorsatzes berücksichtigt werden. Da eine Verbreiterung des Erntevorsatzes mit einer stetigen Zunahme des Eigengewichts verbunden ist, nehmen somit die Kräfte, die auf den Erntevorsatz wirken, insbesondere das Biegemoment, weiter zu. Aus der DE 10 2004 008 342 A1 ist ein Erntevorsatz für einen Mähdrescher bekannt, der einen Rahmen umfaßt, an dem sich ein Querträger horizontal und quer zur Vorwärtsrichtung erstreckt.

Die DE 10 2005 016 334 A1 offenbart einen Auswurfkrümmer für einen Feldhäcksler, der einen rahmenförmigen oder gitterförmigen Stützzusammenbau umfaßt.

Aus der DE 956 815 B ist ein in Leichtbauweise herstellbarer Gestellaufbau für Bindemäher bekannt.

Die AT 180 915 B offenbart einen selbstfahrenden Motormäher, dessen Mähbalken in Leichtbauweise in Form eines Profilstabes ausgeführt ist.

Aus der DE 10 2004 059 064 A1 ist ein Vorsatzgerät für landwirtschaftliche Erntemaschinen zum Abtrennen, Aufnehmen und Weiterführen von Maispflanzen bekannt, bei dem trommelförmige Rotationskörper verwendet werden, die aus Leichtwerkstoffen hergestellt sind, insbesondere aus Kunststoffen oder metallischen Legierungen.

Aus der FR 1 471 041 A ist ein weiterer Aufsatz für einen Mähdrescher bekannt. Der Aufsatz umfaßt einen Balken zur Aufnahme einzelner Schneidezähne, wobei der Balken eine Hohlraumkonstruktion mit einer Querstrebe umfaßt.

Die US 5,671,595 A betrifft einen Erntevorsatz für eine Erntemaschine mit einer Boden- und Rückwand, die über Querprofile und Verstärkungen verbunden sind.

Die DE 32 45 372 A1 beschreibt eine Erntebergungsvorrichtung für Erntemaschinen mit einem Schrägfördergehäuse und einer daran angeschlossenen Aufnahmeplattform.

Die US 2008/271426 A1 beschreibt ebenfalls einen Erntevorsatz für eine Erntemaschine.

Aufgabe der Erfindung ist es, eine verbesserte Konstruktion für einen Erntevorsatz vorzustellen, die eine Reduzierung des Eigengewichts und/oder eine Erhöhung der Festigkeit des Erntevorsatzes erlaubt. Insbesondere kann es die erfindungsgemäße Konstruktion erlauben, einen breiteren bzw. größer dimensionierten Erntevorsatz zu ermöglichen.

Erfindungsgemäß wird diese Aufgabe durch die Merkmale des Anspruchs 1 gelöst. Demnach umfaßt der Erntevorsatz für eine Erntemaschine einen Rahmen, der eine Außenwandung aufweist, die einen Hohlraum bildet, wobei im Hohlraum mindestens eine Verstrebung angeordnet ist. Der Rahmen dient zur Aufnahme weiterer Erntewerkzeuge und Komponenten, insbesondere eines Schneidewerks. Der Hohlraum kann, muß aber nicht vollständig durch die Außenwandung umschlossen sein. Die Außenwandung weist insbesondere eine Vorderwand und eine Rückwand auf. Gegebenenfalls kann der durch die Vorder- und Rückwand der Außenwandung gebildete Hohlraum durch eine oder zwei Seitenwandungen vollständig geschlossen werden. Erfindungsgemäß ist innerhalb des Hohlraums mindestens eine Verstrebung angeordnet. Die Verstrebung ist vorzugsweise mit der Außenwandung verbunden. Vorzugsweise ist die Verstrebung mit mindestens einer Innenseite der den Hohlraum bildenden Außenwandung verbunden. Dabei ist es wünschenswert, daß die Verstrebung derart angeordnet ist, daß eine Stabilisierung des Rahmens erreicht wird. Im Vergleich zu Erntevorsätzen, die nach dem Stand der Technik bekannt sind, wird durch die Bildung eines Hohlraums und der gleichzeitigen Verstrebung innerhalb des Hohlraums eine erhebliche Gewichtseinsparung erreicht ohne an Stabilität der Gesamtkonstruktion einzubüßen. Durch die Einsparung von Rohstoffen bei der Fertigung des erfindungsgemäßen Erntevorsatzes ergibt sich folglich eine kostengünstigere Produktionsweise.

Vorteilhafte Weiterbildungen sind in den Unteransprüchen beschrieben.

Vorteilhaft ist es, wenn der Rahmen eine L-förmige Winkelform aufweist. In dieser Ausführungsform läßt sich die Außenwandung in einen horizontal liegenden und einen darauf vertikal stehenden Flächenanteil unterteilen. In einer Betriebsposition erstreckt sich dabei der längere Schenkel des L-förmigen Rahmens in vertikaler Richtung und der kürzere Schenkel liegt in einer horizontalen Ebene. In den folgenden Abschnitten der Beschreibung werden die den längeren Schenkel des L-förmigen Rahmens bildenden Flächen der Außenwandung als Vorder- und Rückwand benannt, wobei die vertikal stehende, auf der Innenseite des L-förmigen Rahmens liegende Wandung als Vorderwand bezeichnet wird.

Eine weitere vorteilhafte Weiterbildung ist dadurch gekennzeichnet, daß der Rahmen in seinem Hohlraum mindestens eine Querstrebe aufweist, die die Vorder- und Rückwand der Außenwandung verbindet und im wesentlichen horizontal verläuft, gegebenenfalls senkrecht zur Seitenwandung. Vorzugsweise werden Vorder- und Rückwand des Rahmens von mehreren Querstreben miteinander verbunden. Bei der L-förmigen Winkelform des Rahmens sind besonders bevorzugt genau zwei Querstreben entlang einer Achse parallel zur Seitenwandung nacheinander angeordnet, die die Vorder- und Rückwand des Schenkels miteinander verbinden. Die Querstreben können Ausnehmungen aufweisen. Denkbar ist, daß die Breite wenigstens einer Querstrebe identisch dem Abstand der beiden Seitenwandungen des Rahmens ist, so daß durch die wenigstens eine Querstrebe ebenfalls die beiden gegenüberliegenden Seitenwandungen des Rahmens miteinander verbunden sind.

Nach einer weiteren vorteilhaften Weiterbildung weist der Rahmen in seinem Hohlraum mindestens eine Längsstrebe auf, die die Vorder- und Rückwand der Außenwandung verbindet und im wesentlichen vertikal verläuft, gegebenenfalls parallel zur Seitenwandung. Dabei erstreckt sich die mindestens eine Längsstrebe in vertikaler Richtung des Rahmens, wobei die Längsstrebe bevorzugt derart breit ausgeführt ist, daß sie die Vorder- und Rückwand der Außenwandung des Rahmens miteinander verbindet. Besonders bevorzugt sind mehrere Längsstreben innerhalb des Hohlraums des Rahmens angeordnet. Bei einer L-förmigen Winkelform des Rahmens verlaufen die Längsstreben somit in vertikaler Richtung entlang der Längsachse des längeren Schenkels des L-förmigen Rahmens, wobei besonders bevorzugt eine Längsstrebe beginnend vom Scheitelpunkt der L-Form entlang der Längsachse des längeren Schenkels zu dessen oben liegenden Ende verläuft.

Es kann vorgesehen sein, daß mindestens eine Strebe der gesamten Verstrebung wenigstens eine Ausnehmung aufweist. Dabei sind die Ausnehmungen derart in der Strebe angeordnet, daß zum einen eine Reduzierung des Gesamtgewichtes des Rahmens erwirkt ist und zum anderen die Stabilität des Rahmens nicht beeinträchtigt ist.

Vorzugsweise weist der Rahmen mindestens eine rohrförmige Durchgangsöffnung auf, die sich parallel zur Vorder- bzw. Rückwand der Außenwandung erstreckt. Besonders vorteilhaft ist bei einer L-förmigen Ausgestaltung des Rahmens eine rohrförmige Durchgangsöffnung am oberen Ende des längeren Schenkels angeordnet und eine zweite rohrförmige Durchgangsöffnung im kürzeren Schenkel des L-förmigen Rahmens angeordnet. Denkbar ist auch, daß durch die mindestens eine rohrförmige Durchgangsöffnung eine benötigte Verkabelung, insbesondere Hydraulikleitungen, zum Betrieb des Erntevorsatzes durchgeführt sind. Besonders bevorzugt erstreckt sich die Durchgangsöffnung vollständig von einer Seitenwandung zur gegenüberliegenden Seitenwandung des Rahmens. Vorteilhaft kann es sein, wenn die rohrförmigen Durchgangsöffnungen als durchgehendes Rohr ausgestaltet sind. Hierdurch kann das Widerstandsmoment gegen Biegung gesteigert werden.

Denkbar ist auch, daß die Streben eine wabenförmige Struktur bzw. Verstrebung innerhalb des Hohlraums des Rahmens bilden. Durch die wabenförmige Struktur, die aus flächig angeordneten, insbesondere sechseckigen Hohlräumen besteht, wird eine besonders stabile Konstruktion des Rahmens erreicht und gleichzeitig eine wesentliche Materialeinsparung erzielt.

Eine weitere vorteilhafte Weiterbildung ist dadurch gekennzeichnet, daß der Rahmen aus Segmenten besteht, die miteinander verbindbar oder verbunden sind. Dabei ist es vorstellbar, daß der Rahmen bezüglich seiner Breite in gleich große Segmente oder in Segmente mit variabler Größe unterteilt ist. Die Verbindung der einzelnen Segmente erfolgt insbesondere durch Verschraubung der Seitenwandungen miteinander, wodurch sich eine formschlüssige und/oder reibschlüssige Verbindung der Segmente ergibt. Ein Vorteil der Unterteilung des Rahmens in einzelne Segmente ist dadurch gegeben, daß sich die Geometrie, insbesondere die Breite, des Rahmens auch nach der Produktion des Rahmens durch Hinzu- bzw. Wegnahme eines Segments verändern läßt. Dieses eröffnet dem Benutzer des Erntevorsatzes gegebenenfalls die Möglichkeit den Erntevorsatz an die vorliegenden Arbeitsbedingungen anzupassen. Im weiteren kann auch die Produktion eines derartigen Erntevorsatzes aufgrund der Unterteilung in einzelne Segmente kostengünstiger gestaltet werden. Insbesondere weist ein Segment des Rahmens in sich zumindest einen Teil der oben genannten Merkmale der vorliegenden Erfindung auf. Demnach weist ein einzelnes Segment vorzugsweise eine L-förmige Winkelform auf, die bevorzugt zumindest eine Querstrebe und/oder wenigstens eine Längsstrebe aufweist. Besonders bevorzugt weist ein einzelnes Segment sechs Querstreben und drei Längsstreben auf, sowie zwei Seitenwände, die in paralleler Richtung zu den Längsstreben verlaufen, wobei die Querstreben senkrecht zu den Seitenwänden angeordnet sind. Die sechs Querstreben können ebenfalls als zwei, auf unterschiedlichen Ebenen angeordnete, breite Querstreben interpretiert werden, wobei die Querstreben Ausnehmungen aufweisen. Die Segmente können rohrförmige Durchgangsöffnungen aufweisen. Vorteilhaft ist es, wenn die rohrförmigen Durchgangsöffnungen benachbarter Segmente miteinander fluchten und miteinander verbunden sind. Hierdurch kann das Widerstandsmoment gegen Biegung gesteigert werden.

Erfindungsgemäβ ist der Rahmen bzw. die Segmente aus Leichtmetallguß hergestellt. Zur Herstellung des Hohlraums innerhalb des Gußstücks werden gängige, nach dem Stand der Technik bekannte Verfahren angewandt. Die daraus resultierenden Ausnehmungen in der Außenwandung des Rahmens bzw. des Segments werden durch mindestens ein auf der die Ausnehmungen umfassenden Außenwandung montiertes Blech abgedeckt. Insbesondere sind die Ausnehmungen auf der Vorderseite des L-förmigen Segments bzw. Rahmens angeordnet und werden durch zwei, die gesamte Vorderwandung des L-förmigen Rahmens bzw. Segments abdeckende Bleche verdeckt bzw. verschlossen, so daß während des Betriebs des Erntevorsatzes keine Erntefrüchte bzw. Kleinteile in den Hohlraum des Rahmens einfallen können.

Besonders bevorzugt bestehen die Rahmen bzw. die Segmente aus Aluminium.

Bevorzugt weist die Außenwandung eine Wandstärke im Bereich von 4 mm bis 6 mm auf, besonders bevorzugt 4 mm. Denkbar ist hierbei, daß ein Rahmen bzw. ein Segment mit einer Wandstärke von 4 mm mittels Kokillengießverfahrens hergestellt ist.

Der erfindungsgemäße Erntevorsatz umfaßt vorteilhafter Weise ein Schneidewerk und ist besonders bevorzugt an einem Mähdrescher montiert. Zusätzlich zum Schneidewerk können alle weiteren benötigten Komponenten am erfindungsgemäßen Erntevorsatz montiert werden.

Weiterhin vorteilhaft umfaßt der Erntevorsatz einen Maisadapter für einen Maishäcksler.

Ein Ausführungsbeispiel der Erfindung wird in den nachstehenden Zeichnungen im einzelnen erläutert. In den Zeichnungen zeigen
- Fig. 1: eine perspektivische Vorderansicht des erfindungsgemäßen Erntevorsatzes,
- Fig. 2: eine zweite perspektivische Vorderansicht des erfindungsge- mäßen Erntevorsatzes,
- Fig. 3: eine perspektivische Rückansicht des erfindungsgemäßen Erntevorsatzes,
- Fig. 4a, 4b: ein Segment des erfindungsgemäßen Erntevorsatzes in einer perspektivischen Darstellung,
- Fig. 5: eine Seitenansicht des Segments aus Figur 4,
- Fig. 5a bis Fig. 5d: Schnitte längs der Linien D-D, C-C, B-B und F-F aus Fig. 5 und
- Fig. 6: ein Schneidewerk für einen Mähdrescher mit den erfindungs- gemäßen Merkmalen der Erfindung.

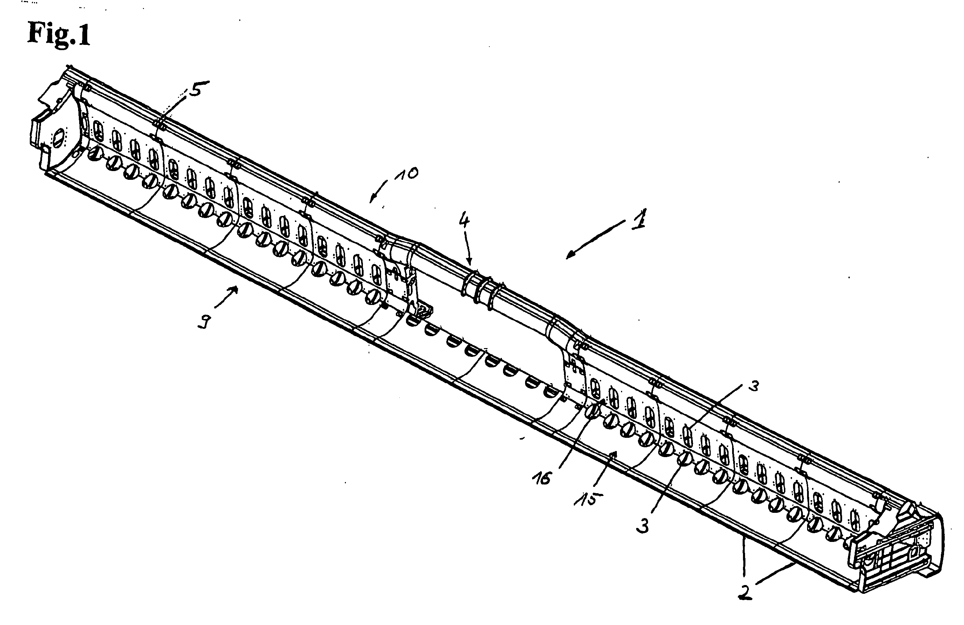

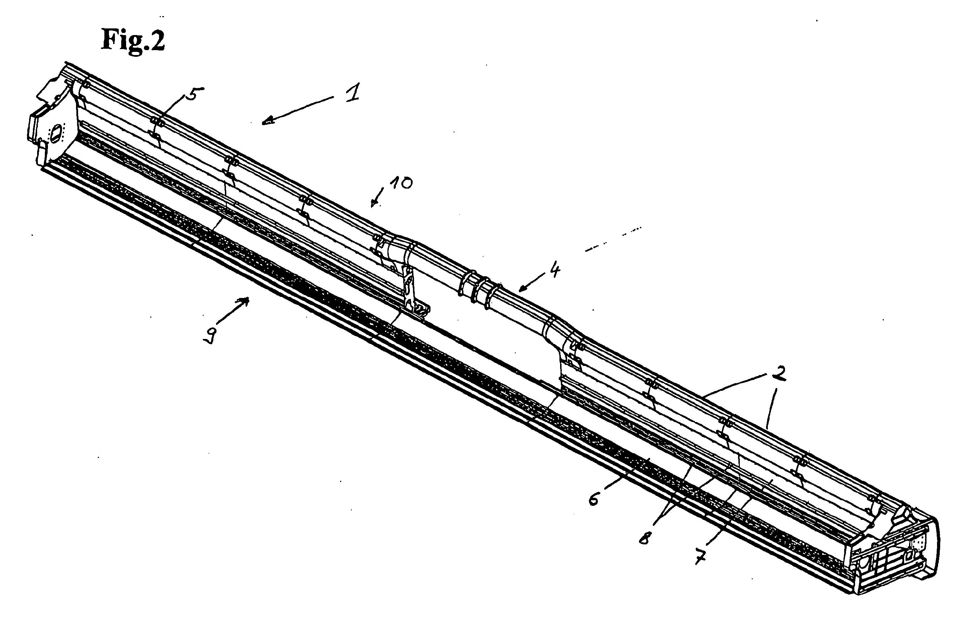

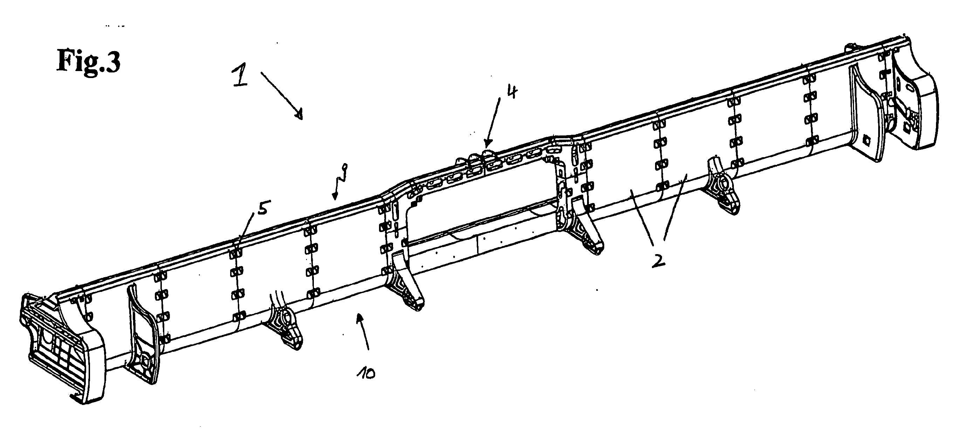

Fig. 1 zeigt den erfindungsgemäßen Erntevorsatz für ein Erntefahrzeug, der mittels Metallgießverfahrens aus Aluminium gefertigt wurde. Der Erntevorsatz umfaßt, wie auch aus Fig. 2 und 3 ersichtlich, einen Rahmen 1, der aus mehreren, zumindest teilweise identischen Segmenten 2 besteht. Der gesamte Rahmen 1 sowie auch die einzelnen Segmente 2 weisen dabei eine L-förmige Winkelform auf, wobei der erste längere Schenkel 16 in vertikaler Richtung ausgerichtet ist und der zweite, kürzere Schenkel 15 sich in einer horizontal liegenden Ebene erstreckt. Die Segmente 2 sind dabei nebeneinander in Richtung der Längsachse des gesamten Rahmens 1 miteinander montiert. Auf etwa halber Strecke der Längserstreckung des Rahmens 1 befindet sich eine Aufnahmevorrichtung 4, die durch eine breite Öffnung innerhalb der Fläche des längeren Schenkels 16 gekennzeichnet ist. Die Aufnahmevorrichtung 4 dient dabei zur Montage des Erntevorsatzes an eine entsprechende Gegenstelle eines geeigneten Erntefahrzeugs.

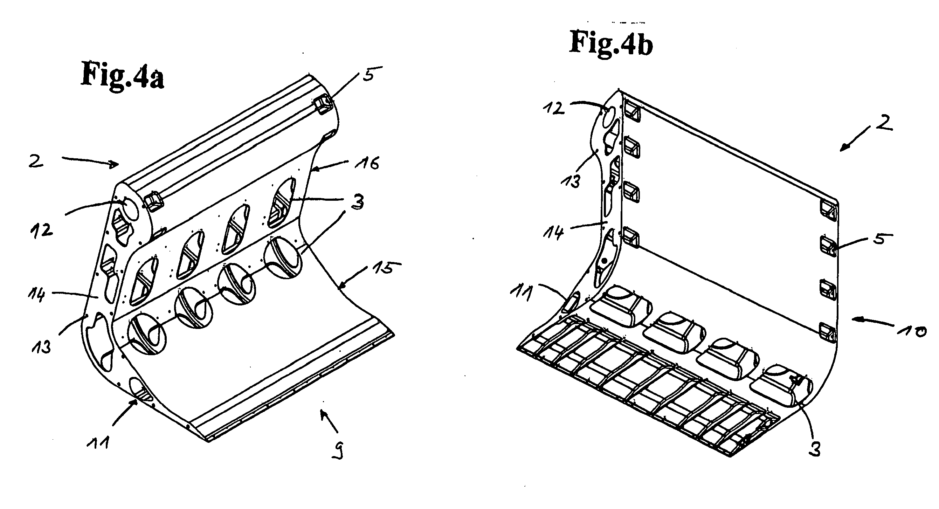

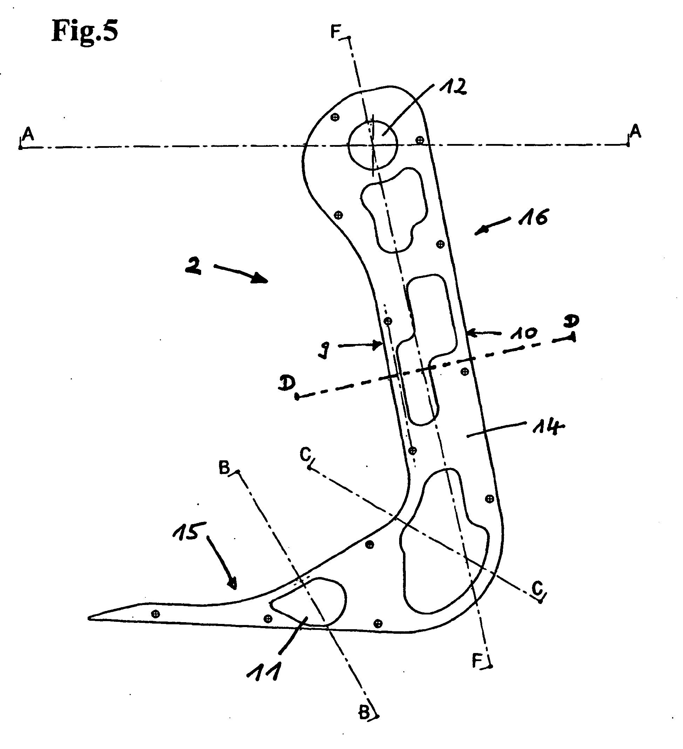

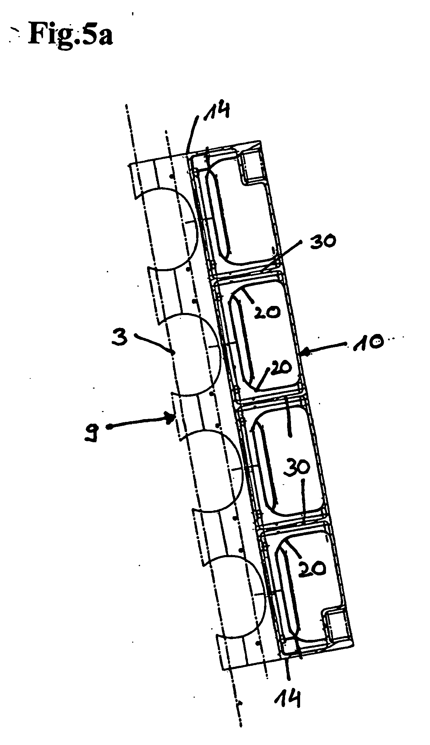

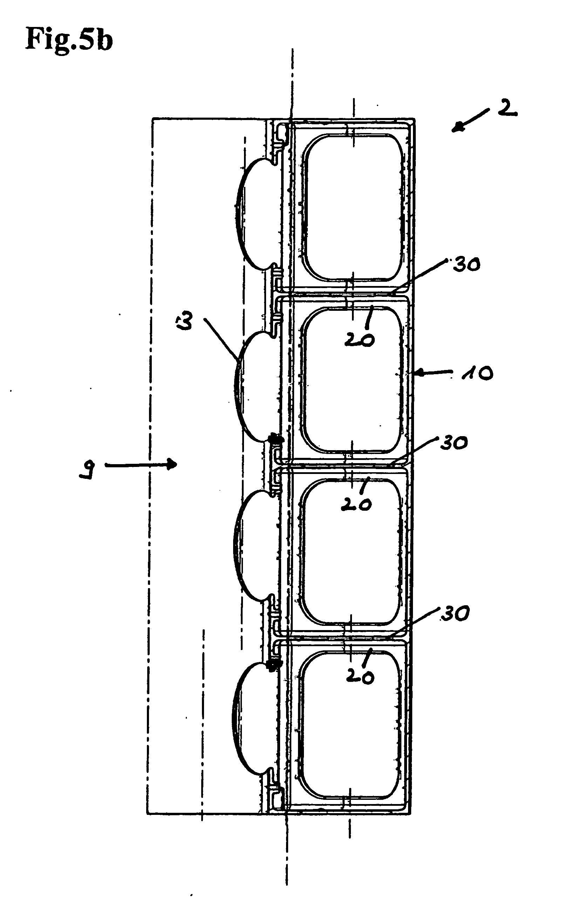

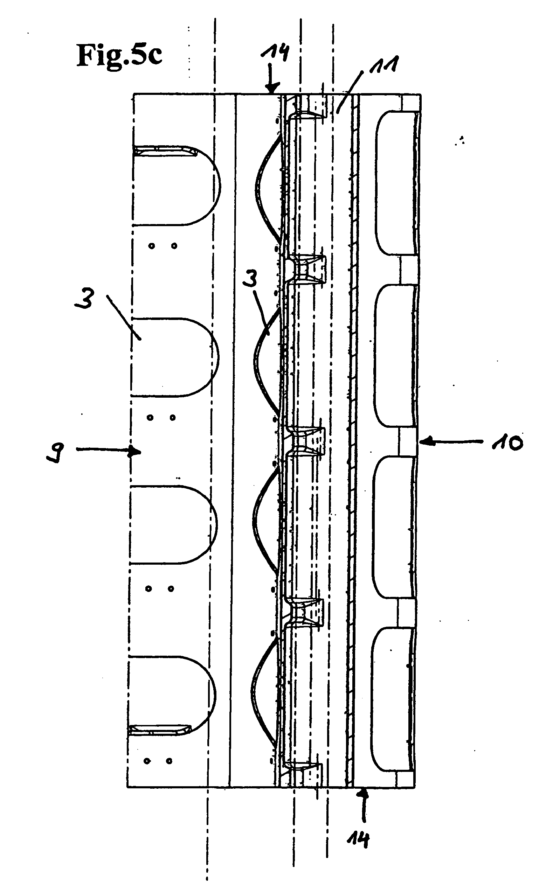

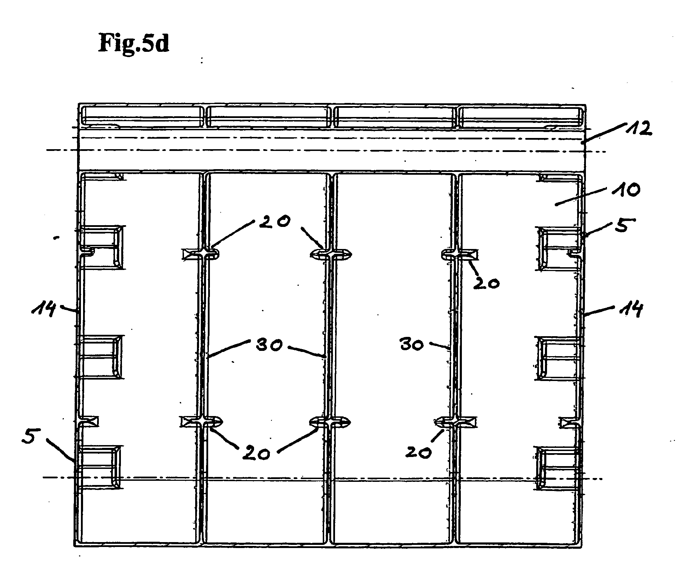

Die Vorderwand des Rahmens 1 weist weiterhin mehrere Ausnehmungen 3 auf, die aufgrund des angewandten Gießverfahrens des Rahmens 1 bzw. der Segmente 2 benötigt werden. Im Inneren des Rahmens 1 bzw. der Segmente 2 befindet sich ein Hohlraum, auf den im späteren Teil der Beschreibung mit Bezug auf die Figuren 4 und 5 zurückgekommen wird. Da sich durch die Ausnehmungen 3 auf der Vorderwand 9 des Rahmens 1 Nachteile während des Arbeitsbetriebs ergeben können, wie zum Beispiel das Ansammeln von Erntefrüchten bzw. Kleinteilen im Hohlraum der Segmente 2 bzw. des Rahmens 1, werden wie in Fig. 2 ersichtlich zwei nebeneinander montierte Bleche 7 auf der Vorderwand 9 des Rahmens 1 montiert. Die Befestigung erfolgt über eine Nietverbindung bzw. Schraubverbindung 8.

In Fig. 3 ist eine perspektivische Rückansicht des erfindungsgemäßen Erntevorsatzes gezeigt. Die Bezugsziffer 10 deutet auf die Rückwand des Rahmens 1 bzw. der einzelnen Segmente 2 hin. Jedes einzelne Segment 2 umfaßt seitlich an der Rückwand 10 jeweils vier Einmündungen 5, die zur vereinfachten Montage zweier benachbarter Segmente 2 dienen. Es ist vorstellbar, daß die Seitenwände 14 derSegmente 2 über Schraubverbindungen miteinander verbunden werden. Die Einmündungen 5, die vereinfacht eine rechteckförmige Aussparung der Rückwand 10 bzw. Vorderwand 9 der Segmente 2 bzw. des Rahmens 1 darstellen, ermöglichen den einfachen Zugriff auf die Schraubverbindung zweier Segmente 2.

Um den erfindungsgemäßen Erntevorsatz an ein entsprechende Erntefahrezug zu montieren wird der Rahmen 1 durch das Erntefahrzeug über die Rückseite 10 des Rahmens 1 mittels der entsprechenden Aufnahmevorrichtung 4 aufgenommen und geeignet fixiert.

Die Figuren 4a, 4b zeigen Detailaufnahmen eines einzelnen Segments 2 in einer perspektivischen Vorder- und Rückansicht. Dabei wird nochmals die angesprochene L-förmige Winkelform des Segments 2 verdeutlich, wobei die Vorderwandung 9 des Segments 2 Ausnehmungen 3 sowohl im Bereich des längeren Schenkels 16 als auch im Bereich des kürzeren Schenkels 15 aufweist. Ebenso befinden sich auf den beiden Seitenwänden 14 des Segments 2 weitere Ausnehmungen. Zusätzlich weist jedes Segment 2 rohrförmige Durchgangsöffnungen 11, 12 auf, wobei sich die erste Durchgangsöffnung 11 von einer Seitenwand 14 zur gegenüberliegenden Seitenwand 14 des Schenkels 15 erstreckt. Die zweite rohrförmige Durzhgangsöffnung 12 erstreckt sich im oberen Bereich des längeren Schenkels 16 von einer Seitenwand 14 zur gegenüberliegenden Seitenwand 14. Die Durchgangsöffnungen 11, 12 dienen zusätzlich zur Aufnahme sämtlicher Leitungen, die für die Ansteuerung des Erntevorsatzes und der daran angeordneten Komponenten durch die Erntemaschine benötigt werden. Durch die Ausnehmungen 3 wird ein erster Einblick auf den Hohlraum geboten, der von der gesamten Außenwandung des L-förmigen Segments 2 umschlossen und gebildet wird. Die darin enthaltenen Verstrebungen sollen nun anhand der Figuren 5 konkreter erläutert werden.

Dabei zeigt Figur 5 eine zweidimensionale Seitenansicht des L-förmigen Segments 2. Die Figur zeigt im Detail einen Blick auf die Seitenwand 14 des Segments 2, die im oberen Bereich die rohrförmige Durchgangsöffnung 12, mehrere Ausnehmungen 3 und im unteren Teil, das heißt im kürzeren Schenkel 15, die zweite rohrförmige Durchgangsöffnung 11 aufweist. Weiterhin sind auf jeder Seitenwand 14 mehrere Bohrungen 13 zu erkennen, die zur Aufnahme der Schraubverbindung bei der Befestigung zweier Segmente 2 dienen.

In Figur 5a ist ein Schnitt entlang der Schnittachse D-D aufgeführt. Die besagte Schnittachse verläuft dabei quer zur Längsrichtung des längeren Schenkels 16. Das Bezugszeichen 3 symbolisiert die Ausnehmungen der Vorderwand 9 des Segments 2. Der Hohlraum des Segments 2, der durch die gesamte Außenwandung, das heißt Vorderwand 9, Rückwand 10, sowie beide Seitenwände 14, umschlossen wird, weist dabei die Querstreben 20 auf. Diese Querstreben 20 verlaufen im wesentlichen horizontal bzw. senkrecht zu den Seitenwänden 14 von der Rückwand 10 zur Vorderwand 9. Darüber hinaus sind im Hohlraum des Segments 2 zusätzlich Längsstreben 30 angeordnet, die im wesentlichen vertikal, das heißt parallel zu den Seitenwänden 14, vom Scheitelpunkt des L-förmigen Segments 2 zum oberen Ende des längeren Schenkels 16 verlaufen. Dabei sind die Längsstreben 30 derart breit ausgeführt, daß sie die Vorderwand 9 und die Rückwand 10 des längeren Schenkels 16 entlang ihrer Erstreckungsachse ebenfalls miteinander verbinden.

Figur 5b zeigt einen Schnitt entlang der Schnittlinie C-C der Figur 5. Dabei werden ebenfalls die entlang der Längsachse des längeren Schenkels 16 verlaufenden Längsstreben 30 ersichtlich. Zusätzlich werden weitere Querstreben 20 gezeigt, die wie die Querstreben 20 aus Figur 5a mit gleicher Orientierung im Hohlraum ausgerichtet sind. Die Querstreben 20 aus Figur 5a und 5b können entweder als eine einzelne breit ausgeführte Querstrebe 20 betrachtet werden, die sich zwischen den Seitenwänden 14 erstreckt und Ausnehmungen aufweist, so daß sich optisch einzelne Querstreben 20 ergeben oder sie können als mehrere, vorzugsweise drei, einzelne Querstreben 20 betrachtet werden. Dies bedeutet, daß der Hohlraum des Schenkels 16 jeweils drei Querstreben 20 aufweist, die sich auf unterschiedlichen Ebenen quer zur vertikalen Erstreckungsachse des längeren Schenkels 16 befinden.

In Figur 5c ist ein weiterer Querschnitt entlang der Schnittlinie B-B des Segments 2 gezeigt, die sich durch den unteren, kürzeren Schenkel 15 erstreckt. Da sich im unteren Schenkel 15 des Segments 2 während des Betriebs des Erntevorsatzes, keine nennenswerte Kräfte aufbauen, kann eine Verstrebung innerhalb des Hohlraums zur Stabilisierung des Rahmens 1 entfallen bzw. vernachlässigt werden. Im Schnittbild wird im Detail die rohrförmige Durchgangsöffnung 11 ersichtlich, die sich durchgehend von einer Seitenwand 14 zur gegenüberliegenden Seitenwand 14 des Segments erstreckt.

Ein letztes Schnittbild ist in Fig. 5d aufgezeigt, das einen Querschnitt entlang der Schnittachse F-F der Figur 5 kennzeichnet. Dabei bietet die Figur 5d im Detail einen Blick auf die Rückwand 10 des längeren Schenkels 16 des Segments 2. Im oberen Bereich der Rückwand 10 befindet sich die rohrförmige Durchgangsöffnung 12, die sich von der linken Seitenwand 14 zur rechten Seitenwand 14 erstreckt. Weiterhin sind an den Seitenwänden 14 jeweils drei Montageflächen 5 bzw. Einmündungen 5 gezeigt, die eine einfachere Montage bzw. Verbindung der einzelnen Segmente 2 gewährleisten. Dabei kann in diese Montageflächen bzw. Einmündungen 5 eingegriffen werden, um eine Schraubverbindung der zwei Seitenflächen 14 von zwei Segmenten zu lösen bzw. zu fixieren. Ebenfalls werden in Figur 5d nochmals die jeweils drei Querstreben 20 dargestellt, die sich auf unterschiedlichen Ebenen senkrecht zur vertikalen Erstreckungsachse des Schenkels bzw. der Seitenwände 14 erstrecken. Weiterhin sind genau drei Längsstreben 30 aufgezeigt, die sich im Hohlraum des längeren Schenkels 16 des Segments 2 vom unteren Bereich, das heißt dem Scheitelpunkt der L-Form, bis zum oberen Ende des Schenkels 16 parallel zur Seitenfläche 14 erstrecken. Die Längsstreben 30 sind derart ausgeführt, daß sie zum einen an der Rückwand 10 angeordnet sind und zum anderen fest mit der in Fig. 5d nicht dargestellten Vorderwand 9 verbunden sind.

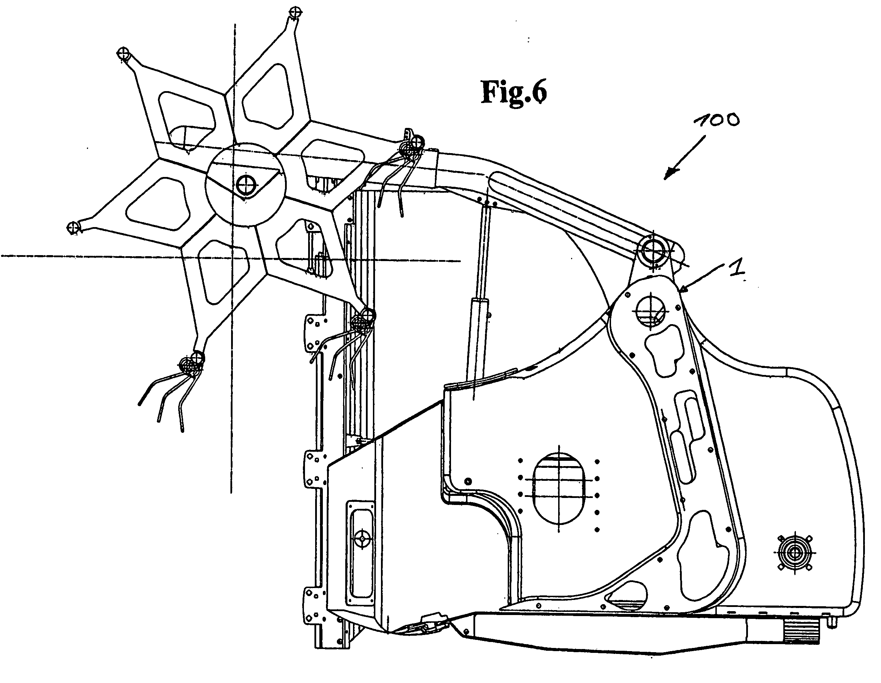

In Fig. 6 ist der erfindungsgemäße Rahmen 1 zur Aufnahme eines Schneidewerks 100 für einen nicht weiter dargestellten Mähdrescher verwendet. Durch die erfindungsgemäße Bauweise des Rahmens 1, wie ausführlich im vorangegangenen Abschnitt der Beschreibung erläutert, kann das Schneidewerk bzw. der Erntevorsatz breiter und größer dimensioniert werden, wodurch sich eine effizientere Arbeitsweise für den Benutzer ergibt. Aus der erheblichen Gewichtsreduzierung des erfindungsgemäßen Erntevorsatzes resultiert zum einen ein wesentlicher Vorteil bei der Verwendung des Erntevorsatzes, zum anderen werden der Transport sowie die Montage und Produktion eines solchen Erntevorsatzes stark vereinfacht. Beispielsweise kann sich durch die erfindungsgemäße Bauweise des Erntevorsatzes, eine Gewichtseinsparung von etwa 40% im Vergleich zu einem nach dem Stand der Technik bekannten Erntevorsatzes ergeben. Trotz der erheblichen Materialeinsparungen führt die erfindungsgemäße Konstruktionweise zu keinerlei Beeinträchtigungen bezüglich der Stabilität des Erntevorsatzes. Auch ergeben sich aus der Gewichtseinsparung nicht zu unterschätzende sekundäre Aspekte. So lassen sich für den Betrieb des erfindungsgemäßen Erntevorsatzes zum Beispiel die Antriebsquellen des Erntefahrzeugs sowie deren Kraftstoffvorrat kleiner dimensionieren, was folglich weitere Kosteneinsparungen mit sich bringt.

## Patentansprüche

1. Erntevorsatz für eine Erntemaschine mit einem Rahmen (1), wobei der Rahmen (1) eine Außenwandung aufweist, die einen Hohlraum bildet, und im Hohlraum (1) mindestens eine Verstrebung (20, 30) angeordnet ist,
**dadurch gekennzeichnet,**
**dass** der Rahmen (1) aus Leichtmetallguß hergestellt ist und an der Außenwandung mindestens ein Blech (7) montiert ist, das Ausnehmungen (3) in der Außenwandung abdeckt.

2. Erntevorsatz nach einem der vorangegangenen Ansprüche, **dadurch gekennzeichnet, dass** der Rahmen (1) eine L-förmige Winkelform aufweist.

3. Erntevorsatz nach Anspruch 1 oder 2, **dadurch gekennzeichnet, dass** der Rahmen (1) in seinem Hohlraum mindestens eine Querstrebe (20) aufweist, die die Vorder- und Rückwand (9, 10) der Außenwandung verbindet und im wesentlichen horizontal verläuft.

4. Erntevorsatz nach Anspruch 1, 2 oder 3, **dadurch gekennzeichnet, dass** der Rahmen (1) in seinem Hohlraum mindestens eine Längsstrebe (30) aufweist, die die Vorder- und Rückwand (9, 10) der Außenwandung verbindet und im wesentlichen vertikal verläuft.

5. Erntevorsatz nach einem der vorangegangenen Ansprüche, **dadurch gekennzeichnet, dass** mindestens eine Strebe (20, 30) der Verstrebung wenigstens eine Ausnehmung aufweist.

6. Erntevorsatz nach einem der vorangegangenen Ansprüche, **dadurch gekennzeichnet, dass** der Rahmen (1) mindestens eine rohrförmige Durchgangsöffnung (11, 12) aufweist, die sich parallel zur Vorder- bzw. Rückwand (9, 10) der Außenwandung erstreckt.

7. Erntevorsatz nach einem der vorangegangenen Ansprüche, **dadurch gekennzeichnet, dass** die Streben (20, 30) eine wabenförmige Struktur innerhalb des Hohlraums des Rahmens (1) bilden.

8. Erntevorsatz nach einem der vorangegangenen Ansprüche, **dadurch gekennzeichnet, dass** der Rahmen (1) aus Segmenten (2) besteht, die miteinander verbindbar oder verbunden sind.

9. Erntevorsatz nach einem der vorangegangenen Ansprüche, **dadurch gekennzeichnet, dass** der Rahmen (1) bzw. die Segmente (2) aus Aluminium bestehen.

10. Erntevorsatz nach einem der vorangegangenen Ansprüche, **dadurch gekennzeichnet, dass** die Außenwandung eine Wandstärke von 4mm bis 6mm aufweist.

## Claims

1. Harvesting attachment for a harvesting machine, having a frame (1), the frame (1) comprising an outer wall which forms a cavity and at least one brace (20, 30) being arranged in said cavity (1), **characterised in that** the frame (1) is produced from light metal casting and at least one panel (7) is mounted on the outer wall and covers cavities (3) in the outer wall.

2. Harvesting attachment according to the preceding claim, **characterised in that** the frame (1) has an L-shaped angular form.

3. Harvesting attachment according to either claim 1 or claim 2, **characterised in that** the frame (1) comprises, in its cavity, at least one cross strut (20) which connects front and rear walls (9, 10) and extends substantially horizontally.

4. Harvesting attachment according to any one of claims 1, 2 or 3, **characterised in that** the frame (1), in its cavity, comprises at least one longitudinal strut (30) which connects the front and rear walls (9, 10) of the outer wall and extends substantially vertically.

5. Harvesting attachment according to any one of the preceding claims, **characterised in that** at least one strut (20, 30) of the brace comprises at least one cavity.

6. Harvesting attachment according to any one of the preceding claims, **characterised in that** the frame (1) comprises at least one tubular through-opening (11, 12) which extends parallel to the front and rear walls (9, 10) of the outer wall.

7. Harvesting attachment according to any one of the preceding claims, **characterised in that** the struts (20, 30) form a honeycomb structure within the cavity of the frame (1).

8. Harvesting attachment according to any one of the preceding claims, **characterised in that** the frame (1) consists of segments (2) which are connectable or connected to one another.

9. Harvesting attachment according to any one of the preceding claims, **characterised in that** the frame (1) and the segments (2) are made of aluminium.

10. Harvesting attachment according to any one of the preceding claims, **characterised in that** the outer wall has a wall thickness of 4 mm to 6 mm.

## Revendications

1. Accessoire de récolte pour une moissonneuse avec un châssis (1), où le châssis (1) présente une paroi extérieure qui forme un espace creux, et dans l'espace creux (1) est disposée au moins une entretoise (20, 30), **caractérisé en ce que** le châssis (1) est réalisé en fonte de métaux légers, et à la paroi extérieure, au moins une tôle (7) est montée qui recouvre des évidements (3) dans la paroi extérieure.

2. Accessoire de récolte selon l'une des revendications précédentes, **caractérisé en ce que** le châssis (1) présente une forme angulaire en forme de L.

3. Accessoire de récolte selon la revendication 1 ou 2, **caractérisé en ce que** le châssis (1) présente dans son espace creux au moins une entretoise transversale (20) qui relie la paroi avant et arrière (9, 10) de la paroi extérieure et qui s'étend sensiblement horizontalement.

4. Accessoire de récolte selon la revendication 1, 2 ou 3, **caractérisé en ce que** le châssis (1) présente dans son espace creux au moins une entretoise longitudinale (30) qui relie la paroi avant et arrière (9, 10) de la paroi extérieure et qui s'étend sensiblement verticalement.

5. Accessoire de récolte selon l'une des revendications précédentes, **caractérisé en ce qu'**au moins une barre (20, 30) de l'entretoise présente au moins un évidement.

6. Accessoire de récolte selon l'une des revendications précédentes, **caractérisé en ce que** le châssis (1) présente au moins une ouverture traversante tubulaire (11, 12) qui s'étend parallèlement à la paroi avant ou arrière (9, 10) de la paroi extérieure.

7. Accessoire de récolte selon l'une des revendications précédentes, **caractérisé en ce que** les entretoises (20, 30) ont une structure en nid d'abeilles à l'intérieur de l'espace creux du châssis (1).

8. Accessoire de récolte selon l'une des revendications précédentes, **caractérisé en ce que** le châssis (1) est constitué de segments (2) qui sont ou peuvent être reliés entre eux.

9. Accessoire de récolte selon l'une des revendications précédentes, **caractérisé en ce que** le châssis (1) respectivement les segments (2) sont en aluminium.

10. Accessoire de récolte selon l'une des revendications précédentes, **caractérisé en ce que** la paroi extérieure présente une épaisseur de paroi de 4 mm à 6 mm.
